# EUROPÄISCHE PATENTANMELDUNG

(11) **EP 3 192 744 A2**
(43) Veröffentlichungstag der Anmeldung: **19.07.2017**
(21) Anmeldenummer: 16198626.0
(22) Anmeldetag: 14.11.2016
(51) Int. Cl.: B65C 9/06, B65C 9/40, G06Q 10/08, H04W 4/00, H04W 4/02

(54) **VERFAHREN ZUM AUSSTATTEN EINER VERPACKUNG, VORRICHTUNG ZUR DURCHFÜHRUNG DES VERFAHRENS, SOWIE INFORMATIONSTRÄGER**

(30) Priorität: 23.11.2015 CH 17012015
(71) Anmelder: WRH Walter Reist Holding AG, 8272 Ermatingen (CH)
(72) Erfinder: Mysicka, Nick, 8712 Stäfa (CH)
(74) Vertreter: CMSRK Rentsch Kaelin AG

(57) **Zusammenfassung**

Bei einem Verfahren zum Ausstatten der Verpackung (11) einer verkaufsfertig verpackten Ware (10) mit zusätzlicher, für den Endabnehmer der Ware vorgesehenen Information, werden die folgenden Schritte durchgeführt, nämlich (a) Bereitstellen der verkaufsfertig verpackten Ware (10); (b) Bereitstellen eines mit der zusätzlichen Information versehenen Informationsträgers (14); (c) Bestimmen eines Ortes auf bzw. an der Verpackung (11), an welchem der Informationsträger (14) platziert werden soll; (d) Platzieren des Informationsträgers (14) an dem vorbestimmten Ort auf bzw. an der Verpackung (11) der verkaufsfertig verpackten Ware (10), derart, dass der Informationsträger (14) an diesem Ort verbleibt; und (e) Bereitstellen der mit dem Informationsträger (14) versehenen Ware (10) zur Weiterverarbeitung.

## Beschreibung

### TECHNISCHES GEBIET

Die vorliegende Erfindung bezieht sich auf das Gebiet der der Herstellung und des Vertriebs von Waren. Sie betrifft ein Verfahren zum Ausstatten von Waren mit für den Endabnehmer vorgesehener, zusätzlicher Information.

Sie betrifft weiterhin eine Vorrichtung zur Durchführung des Verfahrens sowie einen Informationsträger für ein solches Verfahren.

### STAND DER TECHNIK

Das Ausstatten von Waren mit für den Endabnehmer (Kunden oder Konsumenten) der Ware vorgesehener Information spielt im Vertrieb der Waren, insbesondere zu Vermarktungszwecken, eine wichtige Rolle. Oft sind solche Informationen durch Bedrucken der Verpackung an den Waren angebracht. Eine weitere Möglichkeit der Ausstattung besteht darin, solche Informationen mittels gedruckten Labels an die Waren anzubringen. Aus dem Stand der Technik sind hierzu verschiedene Verfahren und Vorrichtungen bekannt, mittels welchen Waren mit Labels versehen werden können.

EP1010630 A2 beschreibt ein Beutellaminat, welches eine innere Schicht und eine äussere Schicht, enthaltend einen festen Teil und einen abnehmbaren Aufkleberteil, umfasst. Der feste Teil mit einem dauerhaften Kleber ist an der inneren Schicht befestigt. Der abnehmbare Aufkleberteil ist auf seiner Seite zur inneren Schicht hin mit einem Kleber versehen, der den abnehmbaren Aufkleberteil nicht dauerhaft an der inneren Schicht befestigt. Es wird unter anderem ein druckempfindlicher Kleber beschrieben, der am abnehmbaren Aufkleberteil verbleibt, wenn der abnehmbare Aufkleberteil von der inneren Schicht abgenommen wird, so dass der Aufkleber auf andere Waren, wie z.B. Kinderkleider, aufgebracht werden kann.

US8065827 B2 beschreibt unter anderem eine Flasche mit einem Label, welches zu Werbezwecken dient. Das Label kann Informationen zur Flasche oder Informationen, welche nicht mit der Flasche in Verbindung stehen, bereitstellen. Es wird weiter ein Informationsträger und ein Befestigungselement beschrieben, womit ein Werbeprodukt an einem Behälter angebracht werden kann. Das Befestigungselement kann so konfiguriert sein, dass es dem Verbraucher erlaubt, das Werbeprodukt zu ersetzen oder wieder anzubringen.

US8272562 B2 beschreibt ein Hängeetikett für Werbezwecke mit assoziierten Produktmustern, kombiniert mit interaktiven scanbaren Codes welche auf Kontaktinformationen oder URLs verweisen. Das Hängeetikett kann Werbemuster oder Cross-Werbemuster und zugehörige Informationen bereitstellen, wobei das Hängeetikett einen scanbaren Code, wie z.B. einen QR-Code, und ein integriertes Produktmuster, wie z.B. ein Duftmuster, trägt. Das Hängeetikett kann mit einem Bändel an der Ware befestigt werden.

US2012/0031548 beschreibt eine Vorrichtung zum Applizieren eines Etiketts auf eine Nicht-Regelfläche, Die Vorrichtung umfasst ein Etikettenzuführelement, eine Anordnung von Etikettenkonformationspaletten, eine Druckquelle, und eine Anordnung von Zielobjektpräsentationsstationen. Das Etikettenzuführelement umfasst eine Ablösespitze, die angrenzend an eine Trägerfolienlaufstrecke angeordnet ist, und eine Etikettenlaufstrecke, die ab der Ablösespitze in eine andere Richtung läuft als die Trägerfolienflaufstrecke. Die Anordnung von Etikettenkonformationspaletten ist gezwungen, eine Palettenlaufstrecke zu umkreisen. Jede Palette umfasst eine Schale, die einen Hohlraum bildet, der mit einer vorher festgelegten Form einer Nichtregelfläche assoziiert ist und einen äusseren Rand und eine elastische Membran aufweist, welche den Hohlraum entlang des äusseren Rands verschliesst. Die Zielobjektpräsentationsstationen sind so konzipiert, dass sie einzelne Zielobjekte halten können und gezwungen sind, eine Zielobjektlaufstrecke zu umkreisen, wobei ein Teil der Zielobjektlaufstrecke angrenzend an die Palettenlaufstrecke angeordnet ist.

DE19832548 A1 beschreibt ein Verfahren und eine Vorrichtung zur Kennzeichnung von verschiedenartigen Waren, wobei mindestens eine Sensoreinrichtung die, vorzugsweise geometrischen, Eigenschaften einer zu kennzeichnenden Ware erkennt, in Abhängigkeit der Eigenschaften eine bevorzugte Stelle auf der Ware ermittelt wird und eine Kennzeichnung durch eine Kennzeichnungseinrichtung an die bevorzugte Stelle der Ware angebracht wird.

Bei der Ausstattung von Waren mit Information spielen verschiedene Faktoren bezüglich der Art der Ware oder der anzubringenden Information eine wichtige Rolle. Beispielsweise ist es bei einer Ausstattung einer Serie von Waren mittels Labels wünschenswert, dass die Labels an einem vorbestimmten Ort angebracht werden. Bei einer Serie von Getränkeflaschen sollten die Labels z.B. jeweils auf der gleichen Höhe angeordnet sein. Die spezifische Form der Ware oder die Beschaffenheit der Oberfläche, an welcher die Information angebracht wird, stellt weitere Anforderungen an das Label oder die Art, wie dieses an die Ware angebracht wird, welche über eine Ausstattung von glatten, flachen Oberflächen hinausgehen können. Nebst der Ausstattung der Waren durch den Hersteller selbst, kommt es des Weiteren gelegentlich vor, dass ein Drittanbieter im Rahmen eines Cross-Marketing Projektes seine Information zusätzlich zur bereits an der betreffenden Ware vorhandenen Information an die Ware anbringt. Bei solchen Vorgängen kann eine genaue Positionierung des Labels an die Ware von besonderer Wichtigkeit sein. Im Rahmen von besonderen Aktionen, welche begleitend zum gewöhnlichen Vertrieb der Ware stattfinden, z.B. Wettbewerbsaktionen, kann es zudem erwünscht sein, dass das Label von der Ware abgelöst und auf eine zu bestimmende Art weiterverwendet werden kann.

### DARSTELLUNG DER ERFINDUNG

Es ist daher eine Aufgabe der Erfindung, ein Verfahren zur Ausstattung von Waren mit Information bereitzustellen, welches die Flexibilität in der Anwendung verbessert. Es ist auch Aufgabe der Erfindung, ein Verfahren zur Ausstattung von Waren mit Information bereitzustellen, welches unabhängig von einem Produktionsprozess der Waren durchgeführt werden kann.

Es ist eine weitere Aufgabe der Erfindung, eine Vorrichtung zur Durchführung des Verfahrens sowie einen Informationsträger für das Verfahren anzugeben.

Die Aufgaben werden durch die Merkmale der Ansprüche 1, 15 und 22 gelöst. Beispielhafte und/oder bevorzugte Ausgestaltungen der Erfindung sind in den abhängigen Ansprüchen und in der vorliegenden Offenbarung gegeben.

Das erfindungsgemässe Verfahren zum Ausstatten der Verpackung einer verkaufsfertig verpackten Ware mit zusätzlicher, für den Endabnehmer der Ware vorgesehenen Information umfasst die Schritte: (a) Bereitstellen der verkaufsfertig verpackten Ware; (b) Bereitstellen eines mit der zusätzlichen Information versehenen Informationsträgers; (c) Bestimmen eines Ortes auf bzw. an der Verpackung, an welchem der Informationsträger platziert werden soll; (d) Platzieren des Informationsträgers an dem vorbestimmten Ort auf bzw. an der Verpackung der verkaufsfertig verpackten Ware, derart, dass der Informationsträger an diesem Ort verbleibt; und (e) Bereitstellen der mit dem Informationsträger versehenen Ware zur Weiterverarbeitung.

Das erfindungsgemässe Verfahren eignet sich mit Vorteil für die Ausstattung der Verpackung einer Ware mit einzelnen Informationsträgern, es ist aber auch eine Ausstattung der Verpackung einer Ware mit mehreren Informationsträgern denkbar.

Das Bereitstellen und Platzieren des Informationsträgers mit zusätzlicher Information bietet den Vorteil, dass bereits vorhandene Information auf der Verpackung der Ware ergänzt oder ersetzt werden kann. Dies kann sich z.B. bei Cross-Marketing Projekten als nützlich erweisen, bei welchen sich die zusätzliche Information von der bereits vorhandenen Information bezüglich der Erscheinung, z.B. der Kennzeichnung der Ware, unterscheiden kann. Die zusätzliche Information bietet weiter den Vorteil, dass die Werbefläche der Verpackung, welche die bereits vorhandene Information trägt, ergänzt und falls erwünscht, erweitert werden kann.

Mit Vorteil ist der Informationsträger nach der Platzierung wieder ablösbar, was z.B. durch einen Endabnehmer vorgenommen werden kann, der den Informationsträger zu einem anderen Zweck, z.B. für eine Wettbewerbsaktion, weiterverwenden kann. Der Informationsträger kann in einer besonders vorteilhaften Ausgestaltung nach dem Ablösen wieder an der Ware oder an einem anderen Ort repositioniert werden.

Zur Abstimmung mit der Basis-Information, kann der Informationsträger mit der zusätzlichen Information z.B. mindestens teilweise transparent sein. Dies kann vorteilhaft sein, falls die zusätzliche Information Basis-Information verdeckt, welche von Gesetzes wegen sichtbar bleiben müssen, wie z.B. bestimmte Lebensmittelinformationen.

Gemäss einer Ausgestaltung der Erfindung ist auf der Verpackung der verkaufsfertig verpackten Ware bereits eine Basis-Information für den Endabnehmer der Ware platziert, und im Schritt (c) der Bestimmung eines Ortes auf bzw. an der Verpackung, an welchem der Informationsträger platziert werden soll, wird die Bestimmung des Ortes für die zusätzliche Information nach Massgabe der Platzierung der Basis-Information vorgenommen.

Je nach Anwendung, welche z.B. von der jeweiligen (Cross-)Vermarktungsstrategie oder von jeweiligen Aktionen wie Wettbewerben oder zeitlich begrenzten Spezialangeboten abhängen kann, kann die Platzierung der zusätzlichen Information auf verschiedene Arten vorgenommen werden. Die Bestimmung des Ortes für die zusätzliche Information nach Massgabe der Platzierung der Basis-Information kann insbesondere für Cross-Marketing Projekte wichtig sein, bei welchen die zusätzliche Information mit Vorteil die Basis-Information ergänzen und auf diese abgestimmt sein soll.

Insbesondere kann mit dem Anbringen der zusätzlichen Information die Basis-Information mindestens teilweise verdeckt werden.

Dies kann mit Vorteil dazu genutzt werden, eine Basis-Information so zu verdecken, dass sie mit dem Ablösen des Informationsträgers von der Ware sichtbar wird. Bestimmte Werbeinformationen können auf diese Weise so platziert werden, dass ein Endabnehmer an der Vermittlung der Werbebotschaft durch das Ablösen des Informationsträgers miteinbezogen wird.

Alternativ oder in Ergänzung kann die zusätzliche Information mit der Basis-Information eine informative Einheit bilden.

Beispielsweise kann die Basis-Information ein erster Teil eines Bildes und die zusätzliche Information ein zweiter Teil des Bildes sein, wobei die Basis-Information und die zusätzliche Information sich zusammen zum gesamten Bild ergänzen.

Alternativ kann die zusätzliche Information vollständig getrennt von der Basis-Information angebracht werden.

Hierdurch wird für die auf der Ware angebrachte Information zusätzliche Fläche erschlossen, die sonst ungenutzt bliebe.

In einer anderen Ausgestaltung des erfindungsgemässen Verfahrens wird vor dem Schritt (d) des Platzierens des Informationsträgers an dem vorbestimmten Ort auf bzw. an der Verpackung der verkaufsfertig verpackten Ware, derart, dass der Informationsträger an diesem Ort verbleibt, die verkaufsfertig verpackte Ware für diesen Schritt in ihrer räumlichen Lage im Hinblick auf diesen Schritt positioniert.

Dies kann zum Beispiel vorteilhaft sein, wenn die geeignete Positionierung der verpackten Ware günstiger zu bewerkstelligen ist als eine geeignete Positionierung des Informationsträgers für das Platzieren des Informationsträgers an dem vorbestimmten Ort.

Insbesondere kann vor der Positionierung der verkaufsfertig verpackten Ware die Art und/oder aktuelle Position der Ware erfasst, und das Ergebnis dieser Erfassung zur Steuerung eines oder mehrerer der nachfolgenden Verfahrensschritte verwendet werden.

Die Steuerung eines oder mehrerer Verfahrensschritte in Abhängigkeit vom Ergebnis der Erfassung der Art und/oder der aktuellen Position der Ware bietet den Vorteil, dass die Automatisierung des Verfahrens gesteigert werden kann.

Die Steuerung eines oder mehrerer Verfahrensschritte kann eine typologische Steuerung sein, wobei die Typologie in der Regel die Art von Waren in einer Serie betrifft.

Alternativ oder in Ergänzung kann die Steuerung eine individualbestimmte Steuerung sein, wobei die Individualbestimmung sich z.B. auf ein individuelles Produkt beziehen kann. Eine Individualbestimmung und geeignete Steuerung ist auch in Bezug auf den Endabnehmer denkbar, so dass ein Produkt durch die individualisierte zusätzliche Information auf den individuellen Endabnehmer abgestimmt werden kann.

Eine individualbestimmte Steuerung kann mit Vorteil in Abhängigkeit des Ergebnisses einer Erfassung der Ware in eine der erfindungsgemässen Verfahrensschritte rückkoppeln, so dass ein Individualregelkreis entsteht.

In einer vorteilhaften Ausgestaltung kann eine lokale oder remote Datenbank bereitgestellt werden, von welchem zur Steuerung ein Steuermodul oder eine Datenverarbeitungsvorrichtung typologische oder individuelle Daten, z.B. über den Endabnehmer, bezieht und diese für die individualbestimmte Steuerung verwendet.

Optional wird vor der Positionierung der verkaufsfertig verpackten Ware die räumliche Form der Ware erfasst, und das Ergebnis dieser Erfassung zur Steuerung eines oder mehrerer der nachfolgenden Verfahrensschritte verwendet.

Dies kann insbesondere bei Waren oder Verpackungen mit unebenen Oberflächen von Vorteil sein. Mit dem Ergebnis der Erfassung der räumlichen Form der Ware und/oder der Verpackung der Ware kann bei Bedarf zum Beispiel das Platzieren des Informationsträgers angepasst werden, so dass der Informationsträger auch bei unebenen Oberflächen nach dem Platzieren an dem vorbestimmten Ort verbleiben kann.

Optional kann die Art und/oder die räumliche Position der Basis-Information erfasst werden und das Platzieren der zusätzlichen Information auf diese Erfassung abgestimmt werden. Dies kann z.B. von Vorteil sein, wenn ein Teil der Basis-Information nicht verdeckt werden soll.

In einer anderen Ausgestaltung des erfindungsgemässen Verfahrens wird die verkaufsfertig verpackte Ware in einem Produktionsprozess erzeugt, und der Schritt des Bereitstellens der verkaufsfertig verpackten Ware schliesst an den Produktionsprozess an.

In einer weiteren Ausgestaltung des erfindungsgemässen Verfahrens liegt die verkaufsfertig verpackte Ware in Gebinden vor, und beim Schritt des Bereitstellens der verkaufsfertig verpackten Ware wird die verkaufsfertig verpackte Ware zur Weiterverarbeitung vereinzelt.

Dies kann zum Beispiel dann vorkommen, wenn im Rahmen eines Cross-Marketing Projektes die Ausstattung der Ware mit der Zusatzinformation nicht beim Hersteller selbst, sondern beim Verteiler oder beim einem Drittanbieter vorgenommen wird. Insbesondere kann beim Schritt des Bereitstellens der mit dem Informationsträger versehenen Ware zur Weiterverarbeitung eine Vielzahl von mit dem Informationsträger versehenen verkaufsfertig verpackten Waren zu einem Gebinde zusammengefasst werden.

Auf diese Weise können die Waren nach der Ausstattung der Waren mit Information einem Verteiler geliefert werden.

In einer wieder anderen Ausgestaltung des erfindungsgemässen Verfahrens werden zur Bereitstellung der mit der zusätzlichen Information versehenen Informationsträger von aussen zugeführte Steuerinformationen verwendet.

Dies hat den Vorteil, dass die Automatisierung des Verfahrens gesteigert werden kann. Weiter kann die Steuerinformation mit Ergebnissen einer Erfassung der Art und/oder der Form und/oder der aktuellen Position der Ware gekoppelt sein, so dass ein Regelkreis gebildet wird, mittels welchem die Ausstattung der Waren mit Information geregelt werden kann.

In einer weiteren Ausgestaltung des erfindungsgemässen Verfahrens sind die von aussen zugeführten Steuerinformationen zur Individualisierung der mit der zusätzlichen Information versehenen Informationsträger geeignet.

Dies hat den Vorteil, dass die Flexibilität des Verfahrens gesteigert werden kann, da je nach Art und Ausgestaltung der Ware und gegebenenfalls in Abstimmung auf einen bereits bekannten Endabnehmer der Informationsträger individualisiert und der jeweiligen Ware angepasst werden kann. Optional ist es auch möglich, eine Serie von gleichen Waren mit verschiedenen individualisierten Informationsträgern auszustatten.

Das erfindungsgemässe Verfahren bietet den besonderen Vorteil, dass die Ausstattung der Ware mit zusätzlicher Information nicht an den Produktionsprozess gekoppelt ist. und unabhängig vom Produktionsprozess der Waren durchgeführt werden kann. Allfällige Besonderheiten der Ware und des zu bestimmenden Ortes, an welchem der Informationsträger platziert werden soll, können erfasst werden, wobei das Ergebnis der Erfassung für die nachfolgenden Verfahrensschritte verwendet werden kann, was Flexibilität hinsichtlich der Ware und Unabhängigkeit vom Produktionsprozess gewährleistet.

Weiterhin kann die von aussen zugeführten Steuerinformationen zur Individualisierung der mit der zusätzlichen Information versehenen Informationsträger über ein Netz aus externen Datenbanken zugeführt werden.

Die erfindungsgemässe Vorrichtung zur Durchführung des Verfahrens nach der Erfindung ist dadurch gekennzeichnet, dass die Vorrichtung eine steuerbare Applikationsvorrichtung sowie eine Steuerung umfasst, welche den Betrieb der steuerbare Applikationsvorrichtung steuert.

Die Steuerung kann dabei für die Eingabe von externen Steuerinformationen ausgebildet sein.

Insbesondere kann die Steuerung über ein Netz mit externen Datenbanken in Verbindung stehen.

Weiterhin kann die Steuerung mit Mitteln zur Erfassung der Art und/oder aktuellen Position und/oder räumlichen Form der Ware verbunden sein.

Alternativ dazu kann auch die steuerbare Applikationsvorrichtung mit Mitteln zur Erfassung der Art und/oder aktuellen Position und/oder räumlichen Form der Ware verbunden sein.

Weiterhin können Mittel zur Bereitstellung der Informationsträger vorhanden sein, wobei die Mittel zur Bereitstellung der Informationsträger mit der Steuerung und mit der steuerbaren Applikationsvorrichtung verbunden sind.

Auch ist es denkbar, dass die steuerbare Applikationsvorrichtung erste Mittel zum Vorbeiführen der Ware an zweiten Mitteln zum Applizieren der Informationsträger umfasst.

Der erfindungsgemässe Informationsträger zur Ausstattung der Verpackung einer verkaufsfertig verpackten Ware mit zusätzlicher, für den Endabnehmer der Ware vorgesehenen Information in dem erfindungsgemässen Verfahren ist dadurch gekennzeichnet, dass der Informationsträger von der Ware rückstandslos ablösbar ist.

Insbesondere kann der abgelöste Informationsträger an der Verpackung derselben Ware oder an einem anderen Ort repositionierbar sein.

Dies kann zum Beispiel für bestimmte Werbe- oder Wettbewerbsaktionen genutzt werden, bei welchen der abgelöste Informationsträger an der Verpackung einer anderen Ware repositioniert wird und der Endabnehmer mit dieser Verpackung eine bestimmte Aktion einlösen kann. Eine Repositionierung an derselben Ware kann vorteilhaft sein, falls der Endabnehmer den Informationsträger zur weiteren Benutzung an der betreffenden Ware, aber unter Umständen an einem anderen Ort, anbringen will, nachdem er den Informationsträger z.B. zur Sichtung der Basis-Information von der Ware abgelöst hat.

Die Repositionierbarkeit kann zum Beispiel mit einem geeigneten Haftmittel, insbesondere einem Klebstoff oder einer Klebefläche, erreicht werden. Das Haftmittel kann optional druckempfindlich sein. Das Haftmittel kann flächig oder punktuell auf den Informationsträger aufgebracht sein.

Der Informationsträger kann die zusätzlichen Informationen in der unterschiedlichsten Ausbildung enthalten. Es kann sich um optisch erfassbare Bild- und/oder Textelemente oder Codes handeln, oder um magnetisch oder elektronisch auslesbare Informationen.

In einer Ausgestaltung der Erfindung ist der Informationsträger mit elektronischen Mitteln zur Speicherung und/oder der Übermittlung der Information versehen.

Insbesondere kann der Informationsträger eine NFC-Vorrichtung umfassen.

Zum Beispiel kann der Informationsträger einen RFID-Tag umfassen. Vorzugsweise ist der RFID-Tag für eine Nahfeldkommunikation im NFC-Standard mit einer Reichweite von max. 10 cm ausgelegt und unterscheidet sich z.B. von RFID-Tags für die Warensicherung bei Diebstahl.

Insbesondere kann der Informationsträger derart auf einem NFC-fähigen Smart Phone repositionierbar sein, dass die NFC-Vorrichtung des Informationsträgers mit dem Smart Phone eine Nahfeldkommunikation aufbauen kann.

Zum Beispiel kann der Informationsträger ein mit einem geeigneten Klebstoff oder vergleichbaren Haftmitteln versehener RFID-Tag sein, der an der Rückseite eines Smart Phones repositionierbar ist. Mit dem repositionierten RFID-Tag kann das Smart Phone beispielsweise dazu genutzt werden, um eine bestimmte, durch den Informationsträger vorgegebene und optional in der aufgebrachten Information sichtbare Aktion einzulösen. Zum Beispiel kann ein bestimmter in der aufgebrachten Information angegebener Rabatt in einem bargeldlosen Zahlungsvorgang mit dem Smart Phone, welches den repositionierten RFID-Tag trägt, eingelöst werden.

In einer Ausgestaltung umfasst der Informationsträger Daten zur Bestimmung einer Verwendungszahl, vorzugsweise eine Seriennummer, des Informationsträgers.

Die Verwendungszahl kann dazu genutzt werden, um z.B. eine Rücklaufrate oder Einlöserate einer bestimmten Gutscheinaktion oder Wettbewerbsaktion zu messen. Diese Information kann für den Verteiler und/oder den Werber für die Bestimmung des Erfolgs der Gutscheinaktion oder Wettbewerbsaktion von Nutzen sein. Es ist zum Beispiel denkbar, dass bei jeder Einlösung eines Gutscheins die Seriennummer des Informationsträgers durch einen NFC-Reader ausgelesen wird und die ausgelesenen Daten an eine Datenbank übermittelt wird, welche diese Daten zur Bestimmung der Einlöserate oder Rücklaufrate bereitstellt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine schematische Seitenansicht einer mit einem Informationsträger versehenen beispielhaften Ware (Flüssigkeit) in einer Verpackung in Form einer Flasche;
- Fig. 2: ein schematisches Diagramm der grundlegenden Verfahrensschritte in einem Ausführungsbeispiel des erfindungsgemässen Verfahrens;
- Fig. 3: ein schematisches Diagramm der grundlegenden Verfahrensschritte in einem anderen Ausführungsbeispiel des erfindungsgemässen Verfahrens;
- Fig. 4: ein weiteres Ausführungsbeispiel des erfindungsgemässen Verfahrens, bei dem die Schritte gemäss Fig. 2 oder 3 direkt in Anschluss an die Produktion der Ware vorgenommen werden;
- Fig. 5: ein anderes Ausführungsbeispiel des erfindungsgemässen Verfahrens, bei dem die Schritte gemäss Fig. 2 oder 3 unabhängig von der Produktion der Ware vorgenommen werden;
- Fig. 6: eine schematische Darstellung einer möglichen Positionierung des Informationsträgers relativ zur Basis-Information, wobei die Basis-Information vollständig verdeckt ist;
- Fig. 7: eine schematische Darstellung einer anderen möglichen Positionierung des Informationsträgers relativ zur Basis-Information, wobei der Informationsträger mit der Basis-Information eine Einheit bildet und ablösbar ist;
- Fig. 8: eine schematische Darstellung einer weiteren möglichen Positionierung des Informationsträgers relativ zur Basis-Information, wobei der Informationsträger vollständig getrennt von einer Basis-Information angebracht ist;
- Fig. 9: eine Draufsicht auf ein Ausführungsbeispiel eines Informationsträgers, der eine NFC-Vorrichtung umfasst und repositionierbar ist;
- Fig. 10: eine schematische perspektivische Ansicht eines Smart Phones, auf dessen Rückseite der Informationsträger aus Fig. 9 zur drahtlosen Interaktion mit dem Smart Phone repositioniert ist;
- Fig. 11: eine schematische Seitenansicht eines Ausführungsbeispiels einer im Rahmen der Erfindung einsetzbaren steuerbaren Positioniervorrichtung und einer damit zusammenwirkenden adaptiven Applikationsvorrichtung;
- Fig. 12: eine schematische Seitenansicht einer im Rahmen der Erfindung einsetzbaren Applikationsvorrichtung;
- Fig. 13: eine Schnittansicht der Applikationsvorrichtung aus Fig. 12 entlang der Schnittlinie A-A in Figur 12;
- Fig. 14: eine schematische Darstellung eines Applikationssystems gemäss einem Ausführungsbeispiel der Erfindung, welches in eine Kommunikation mit externen Datenbanken eingebunden und insbesondere für den Online-Handel geeignet ist; und
- Fig. 15: einen möglichen internen Aufbau der Steuerung aus Fig. 14.

### WEGE ZUR AUSFÜHRUNG DER ERFINDUNG

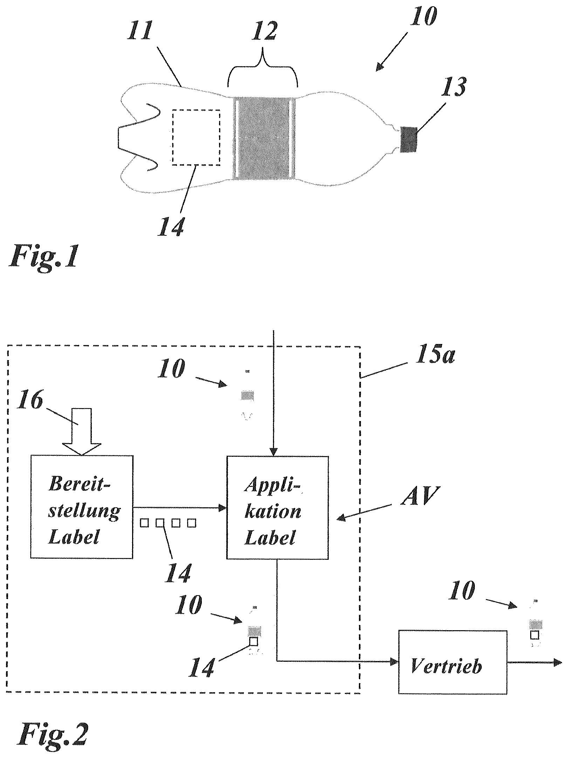

Figur 1 zeigt eine Seitenansicht einer mit einer zusätzlichen Information auf einem Informationsträger 14 versehenen Ware (Flüssigkeit, Getränk) 10, welche eine Verpackung 11 in Form einer Flasche 11 umfasst. Die Flasche 11 ist in einer liegenden Position gezeigt, so dass der Boden der Flasche 11 seitlich liegt. Die Flasche 11 umfasst einen Verschluss 13 und eine auf der Flasche aussen aufgebrachte Basis-Information 12, die beispielsweise gesetzlich vorgeschriebene Angaben wie Zusammensetzung, Herkunftsbetrieb etc. umfassen kann. Die Basis-Information 12 kann beispielsweise aufgedruckt sein oder in Form eines aufgeklebten Etiketts oder Labels vorliegen.

In der gezeigten Ausführungsform ist der Informationsträger 14 in Form eines Labels 14 ausgestaltet, welcher getrennt von der ebenfalls z.B. ebenfalls als Label ausgestalteten Basis-Information 12 im unteren Bereich der Flasche 11 (zum Boden hin) an der Flasche 11 angebracht ist. Die Flasche 11 kann z.B. aus Glas oder PET bestehen. Die Oberfläche im unteren Bereich der Flasche 11, auf der das Label 14 angebracht ist, ist in der Regel eine gekrümmte Oberfläche, wobei die Oberfläche verschiedene Unebenheiten wie z.B. umlaufende Rillen aufweisen kann, welche in der Figur 1 nicht gezeigt sind.

In einer Ausführungsform des Informationsträgers 14 kann der Informationsträger 14 dazu genutzt werden, um derartige Unebenheiten oder Irregularitäten der Oberfläche der Verpackung 11 zu verdecken.

Der Informationsträger 14 kann z.B. ein Label mit einem Aufdruck (optische Information) sein, ein Muster einer Ware (z.B. eine Parfümprobe) enthalten bzw. eine Verpackung mit einem Muster, etc. sein. Der (von den gesetzlichen Vorschriften unabhängige) Informationsträger 14 bietet den Vorteil, dass er ablösbar, repositionierbar und abgestimmt auf eine bereits auf der Ware vorhandene Basis-Information sein kann. Dazu kann der Informationsträger 14 in besonderen Ausführungsformen mindestens teilweise transparent sein, so dass eine Basis-Information 12 oder ein Teil der Basis-Information 12 trotz Überdeckung mit dem Informationsträger 14 weiterhin sichtbar bleiben kann.

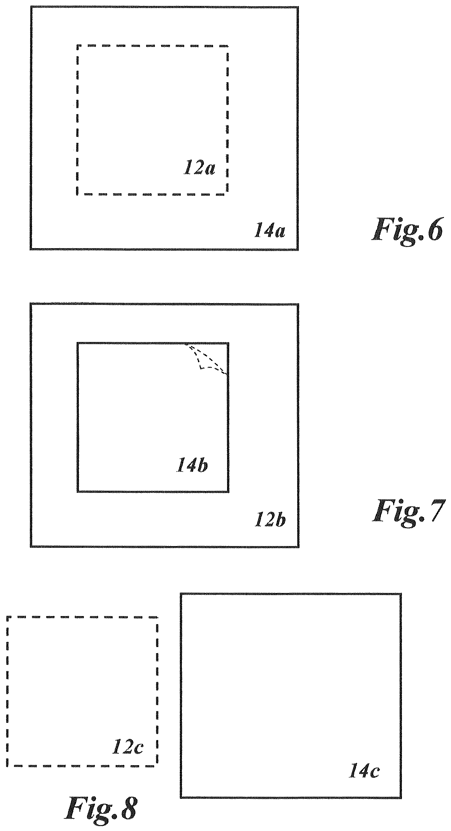

In der in Figur 1 gezeigten Ausführungsform ist das Label 14 getrennt von der Basis-Information 12 an einem anderen Ort auf der Flasche 11 angebracht (siehe Figur 8). Bei Bedarf kann das Label 14 aber auch auf dem Label 12 mit der Basis-Information 12 aufgebracht werden, so dass die Basis-Information 12 zumindest teilweise durch das Label 14 überdeckt wird (siehe Figur 6). In einer Variante kann das Label 14 derart auf das Label 12 mit der Basis-Information 12 aufgebracht werden, dass die Information auf dem Label 14 mit der Basis-Information 12 eine Einheit bildet bzw. integraler Bestandteil der Basis-Information 12 ist (siehe Figur 7).

Figur 2 zeigt ein schematisches Diagramm der Verfahrensschritte eines Applikationsprozesses 15a gemäss einer Ausführungsform des erfindungsgemässen Verfahrens. Im Anschluss an den Applikationsprozess 1 5a ist ein Vertriebsschritt gezeigt. Der gezeigte Applikationsprozess 15a beginnt mit der Bereitstellung einer Ware 10, welche in der Figur als Flasche aus Figur 1 gezeigt wird. Ein Schritt des Verfahrens stellt die Bereitstellung von

Informationsträgern bzw. Labeln 14 mit zusätzlicher Information dar. Die Bereitstellung der Label 14, insbesondere auch deren Ausgestaltung und Informationsinhalt, kann bei Bedarf durch eine von aussen kommende Steuerinformation 16 gesteuert werden. Die Steuerinformation 16 kann z.B. die Grösse, die Beschaffenheit oder den Aufdruck der Labels ändern. In einem weiteren Schritt des Verfahrens werden die Label 14 mittels einer Applikationsvorrichtung AV an die Verpackungen der Waren 10 appliziert. Vor der Applikation des Labels 14 kann der Ort auf bzw. an der Verpackung der Ware 10, an welchem das Label 14 platziert werden soll, bestimmt werden. Die mit dem Label 14 versehenen Waren 10 werden dem Vertrieb zugeführt und gelangen über den Vertrieb an einen Endverbraucher, für den die zusätzliche Information vorgesehen ist.

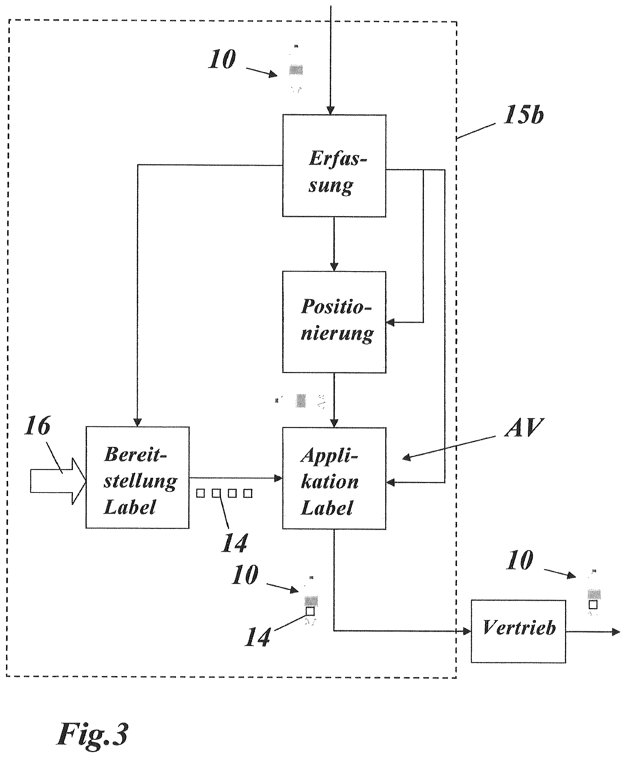

Figur 3 zeigt ein schematisches Diagramm der Verfahrensschritte in einem Applikationsprozess 15b einer weiteren, gegenüber Figur 2 erweiterten Ausführungsform des erfindungsgemässen Verfahrens. Der gezeigte Applikationsprozess 15b beginnt mit dem Bereitstellen der verkaufsfertig verpackten Waren 10, welche in der Figur wiederum als Flasche gezeigt wird. In einem Erfassungsschritt wird die Ware 10 erfasst.

Im Erfassungsschritt kann z.B. die Art der Ware 10 erfasst werden. Die zu erfassende Art der Ware 10 kann verschiedene Eigenschaften der Ware 10 oder der Verpackung der Ware 10, wie z.B. das Material, die Oberflächenbeschaffenheit, die Struktur oder die Festigkeit oder sonstige Parameter umfassen.

Alternativ oder in Ergänzung kann die aktuelle Position der Ware 10 erfasst werden.

Alternativ oder in Ergänzung kann die räumliche Form und Gestalt der Ware 10 erfasst werden.

Alternativ oder in Ergänzung kann die Art und/oder die Position der Basis-Information relativ zur Ware 10 erfasst werden.

Das Ergebnis der Erfassung kann mit Vorteil zur Steuerung der nachfolgenden Schritte des Verfahrens verwendet werden, was in der Figur 3 mit abgewinkelten Pfeilen zwischen den Schritten "Erfassung", "Positionierung", "Applikation Label" sowie "Bereitstellung Label" illustriert ist. Zum Beispiel kann das Ergebnis der Erfassung der aktuellen Position der Ware 10 für einen Schritt der Positionierung der Ware 10 verwendet werden. Die Ware 10 kann auf Grund der erfassten aktuellen Position der Ware 10 in ihrer räumlichen Lage so positioniert werden, dass der vorbestimmte Ort, an welchem ein Label 14 angebracht werden soll, in geeigneter Weise für die Applikation des Labels 14 ausgerichtet wird.

Alternativ oder in Ergänzung kann das Ergebnis der Erfassung dem Schritt der Bereitstellung von Labeln 14 zugeführt werden. Die Bereitstellung der Label 14 kann wiederum von einer externen Steuerinformation 16 gesteuert werden. Mit Vorteil kann die Steuerinformation 16 in Abhängigkeit des Ergebnisses der Erfassung geändert werden. Zum Beispiel können je nach Ergebnis der Erfassung der Art der Ware 10 bei der Bereitstellung der Label 14 verschiedene für die jeweilige Ware 10 geeignete Label 14 aus einem Labelmagazin (nicht gezeigt in der Figur) ausgewählt werden oder die Erstellung der Label 14 wird auf die Art der Ware individuell abgestimmt.

Alternativ oder in Ergänzung kann das Ergebnis der Erfassung dem Schritt der Applikation des Labels 14 zugeführt werden. Die Applikation des Labels 14 kann je nach Ergebnis der Erfassung angepasst werden. Beispielsweise kann je nach Art der Ware 10, z.B. in Abhängigkeit des Materials der Verpackung, der Druck bei der Applikation des Labels 14 angepasst werden, so dass die Verpackung keinen Schaden bei der Applikation nimmt oder in unerwünschter Weise verformt wird. Dies ist beispielsweise von Bedeutung, wenn die Ware in flexiblen Beuteln verpackt ist. Optional ist auch der Einsatz eines geeigneten Gegendruckmittels, wie z.B. eine Druckauflagefläche, ein Dorn oder die Zufuhr von Druckluft, denkbar, welcher den Druck bei der Applikation des Labels 14 ausgleicht.

Die Erfassung der räumlichen Form der Ware 10 kann von Vorteil sein, wenn die Ware 10 oder der vorbestimmte Ort, an welchem das Label 14 angebracht werden soll, unebene Flächen oder Abweichungen von einer Regelfläche aufweist. Je nach Ergebnis der Erfassung kann die Applikation der Label und/oder die Positionierung angepasst werden, so dass das Label 14 in geeigneter Weise an der Ware 10 angebracht werden kann.

Die Verwendung des Ergebnisses der Erfassung für nachfolgende Schritte des Verfahrens kann von Vorteil sein, wenn die zusätzliche Information des Labels 14 bezüglich einer bereits auf der Ware 10 vorhandenen Basis-Information eine räumlich vorbestimmte Position einnehmen soll, was z.B. bei Cross-Marketing Projekten der Fall sein kann. Falls die Applikation des Labels 14 unabhängig vom Hersteller der Waren 10 bei einem Vertriebspartner oder im Rahmen der Logistik vorgenommen wird, kann der Schritt der Erfassung dazu dienen, die nachfolgenden Schritte auf die jeweilige Ware 10 anzupassen, was die Flexibilität des Verfahrens erhöht.

Die mit einem Label 14 versehene Ware 10 kann nach der Applikation des Labels 14 dem Vertrieb zugeführt werden, wie es in Fig. 3 gezeigt wird.

Nach dem Applikationsprozess 15a,b kann optional ein beispielsweise mit einer optischen Erkennung verbundener Prüfungsschritt zur Überprüfung der korrekten Applikation der zusätzlichen Information an der Ware 10 erfolgen, bevor die Ware 10 zum Vertrieb gelangt. Bei einer nicht korrekten Applikation kann die betreffende Ware bei Bedarf aussortiert werden.

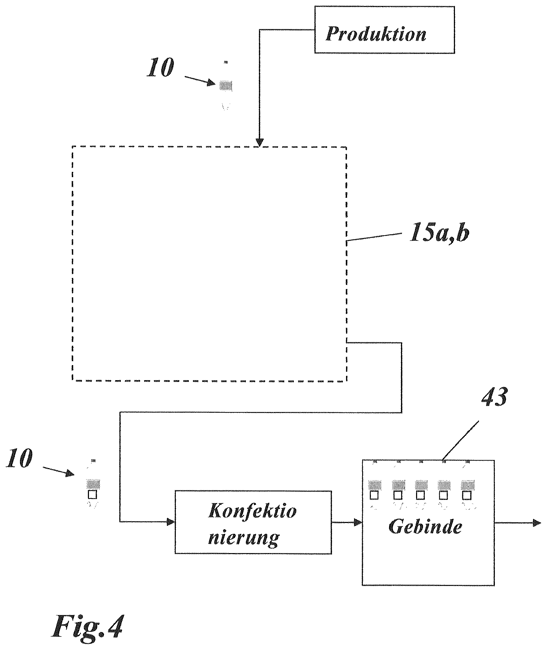

Figur 4 zeigt ein schematisches Diagramm einer Ausführungsform des erfindungsgemässen Verfahrens, bei welchem die verkaufsfertig verpackte Ware in einem Produktionsprozess erzeugt wird. Der Applikationsprozess 15a,b gemäss Figur 2 oder 3 schliesst direkt an die Produktion der Ware 10 an. Nach dem Applikationsprozess 15a,b wird eine Vielzahl von mit Informationsträgern versehenen verkaufsfertig verpackten Waren 10 konfektioniert und zu einem Gebinde 43 zusammengefasst. Das Gebinde 43 kann schliesslich dem Vertrieb zugeführt werden. Unter Gebinde wird dabei wie üblich eine Handelseinheit und Ladeeinheit für die Warenverteilung (Distribution) verstanden. Das Gebinde steht für die Zusammenfassung von Produkten gleicher Art oder verschiedener Art zur gemeinsamen Bestellung im Handel oder zur gemeinsamen Handhabung in der Logistik.

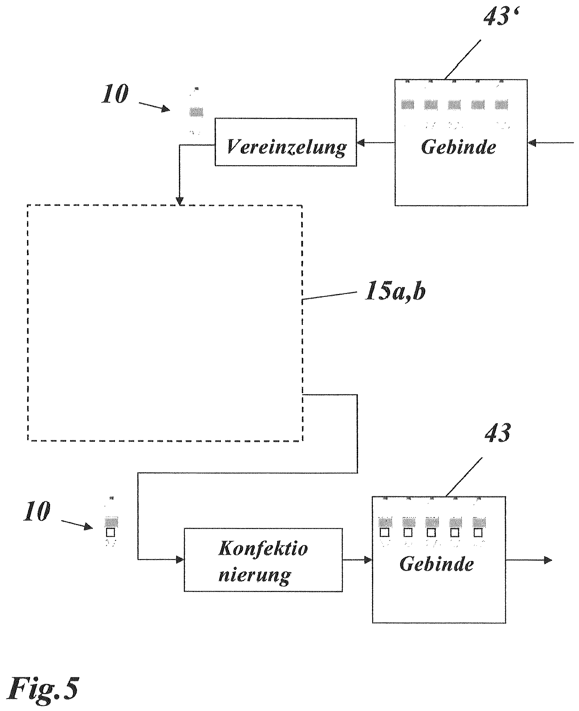

Figur 5 zeigt ein schematisches Diagramm einer weiteren Ausführungsform des erfindungsgemässen Verfahrens, bei welchem die verkaufsfertig verpackten Waren 10 in einem Gebinde 43' vorliegen und zur Weiterverarbeitung zunächst vereinzelt werden. Auf den Vereinzelungsschritt folgt der Applikationsprozess 15a,b gemäss Figur 2 oder 3. Nach dem Applikationsprozess 15a,b wird eine Vielzahl von mit Informationsträgern versehenen verkaufsfertig verpackten Waren 10 konfektioniert und zu einem Gebinde 43 zusammengefasst. Das Gebinde 43 kann schliesslich dem Vertrieb zugeführt werden. Diese Ausführungsform des Verfahrens kann zum Beispiel vorliegen, wenn die Ausstattung der Waren 10 mit Informationsträgern nicht beim Hersteller der Waren 10 vorgenommen wird, sondern bei einem Dritthersteller oder einem Vertriebspartner, was zum Beispiel bei Cross-Marketing Projekten der Fall sein kann. Der Applikationsprozess 15a,b, der eine zusätzliche Information auf verschiedenartige bereitgestellte Waren 10 in flexibler Weise anbringen kann, ist für diese Ausführungsform des Verfahrens besonders vorteilhaft.

Figur 6 zeigt eine schematische Frontalansicht einer Ausführungsform eines Informationsträgers 14a, welcher eine Basis-Information 12a, in Form eines Etiketts oder dgl., verdeckt. Der Informationsträger 14a ist mit Vorteil ablösbar ausgestaltet, so dass ein Endabnehmer den Informationsträger 14a, z.B. in Form eines Etiketts oder Labels, von der Verpackung der Ware ablösen kann und die Basis-Information 1 2a zum Vorschein kommt. Eine solche Ausgestaltung des Informationsträgers 14a kann zum Beispiel bei Wettbewerbsaktionen oder Verlosungsaktionen von Vorteil sein, bei welchen die Basis-Information 12a z.B. einen Wettbewerbscode enthält, der vom Informationsträger 14a verdeckt wird.

Figur 7 zeigt eine schematische Frontalansicht einer weiteren Ausführungsform eines Informationsträgers 14b, welcher mit einer Basis-Information 12b, in Form eines Etiketts, eine Einheit bzw. einen integralen Bestandteil bildet und ablösbar ist. Die Ablösbarkeit ist durch einen gestrichelten Teil einer abgelösten Ecke des Informationsträgers 14b angedeutet. Der Informationsträger 14b, z.B. in Form eines Etiketts, kann auch mit der Basis-Information 12b teilweise überlappend ausgestaltet sein. Alternativ kann der Informationsträger 14b angrenzend an die Basis-Information 1 2b angeordnet sein.

Figur 8 zeigt eine schematische Frontalansicht einer weiteren Ausführungsform eines Informationsträgers 14c, welcher vollständig getrennt von einer Basis-Information 12c an einem separaten Ort angebracht wird.

Der Informationsträger 14a,b,c ist mit Vorteil repositionierbar haftend ausgestaltet, so dass dieser nach rückstandsloser Ablösung von der Ware an einem anderen Ort derselben Ware angebracht werden kann. Hierzu kann der Informationsträger 14a,b,c mit einem Haftmittel, z.B. einem Schälleim, ausgerüstet sein. Der Informationsträger 14a,b,c kann auch derart repositionierbar ausgestaltet sein, dass dieser an einer anderen Ware angebracht werden kann. Dies kann z.B. für bestimmte Gutscheinaktionen von Vorteil sein, z.B. wenn der Endabnehmer den Informationsträger 14a,b,c von einer Ware ablösen und an einer anderen Ware anbringen und die andere Ware mit dem repositionierten Informationsträger 14a,b,c für eine bestimmte Aktion an einem Verkaufsort einlösen kann.

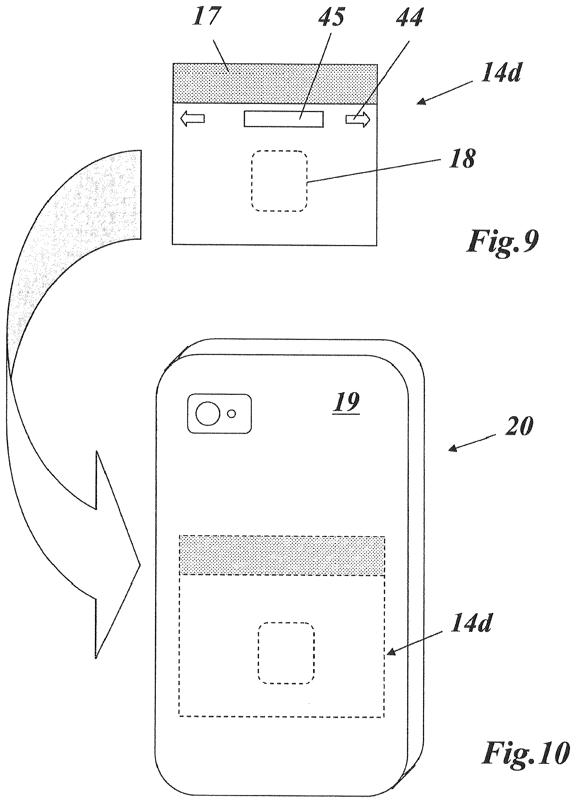

Figur 9 zeigt eine schematische Frontalansicht einer weiteren Ausführungsform eines Informationsträgers 14d, der eine NFC-Vorrichtung 18 umfasst und repositionierbar ist. Der Informationsträger 14d umfasst einen Haftstreifen 17, mittels welchem der Informationsträger 14d an einer (nicht gezeigten) Ware angebracht werden kann. Der Informationsträger 14d kann bei Bedarf aber auch auf einer ganzen Fläche, z.B. der Rückseite des Informationsträgers 14d, mit einem Haftmittel versehen sein. Die NFC-Vorrichtung kann z.B. in Form eines (passiven) RFID-Tags ausgestaltet sein. Eine solche Ausführungsform eines Informationsträgers 14d kann vorteilhaft sein, falls die zusätzliche Information über eine sichtbare, z.B. bedruckte Information hinausgehen soll. Ein Vorteil dieser Ausführungsform ist, dass sie verschiedene Interaktionsmöglichkeiten durch den Konsumenten ermöglicht. Durch die NFC-Vorrichtung kann der Informationsträger 14d mit weiteren Funktionalitäten versehen werden, welche über das blosse Anzeigen von visueller Information hinausgeht.

Fig. 10 zeigt eine schematische perspektivische Ansicht eines NFC-fähigen Smart Phones 20, auf dessen Rückseite der Informationsträger 14d aus Fig. 9 repositioniert ist. Als Beispiel kann der Informationsträger 14d ursprünglich auf einer Getränkeflasche angeordnet gewesen sein und durch den Endabnehmer auf ein NFC-fähiges Smart Phone, repositioniert worden sein. Mit dem repositionierten Informationsträger 14d kann das Smart Phone beispielsweise dazu genutzt werden, um eine bestimmte, durch den Informationsträger 14d vorgegebene und optional in der aufgebrachten Information enthaltene Aktion einzulösen. Zum Beispiel kann ein bestimmter in der aufgebrachten Information angegebener Rabatt in einem bargeldlosen Zahlungsvorgang mit dem Smart Phone 20, welches den repositionierten RFID-Tag trägt, eingelöst werden. Es kann im Rahmen einer Werbeaktion auch ein Guthaben vom Informationsträger 14d auf das Smart Phone übertragbar sein, das nach Art einer Prepaid-Karte oder direkt für einen Bezahlvorgang mit dem Smart Phone 20 benutzt werden kann.

In einer besonders bevorzugten Ausführungsform umfasst der Informationsträger 14d eine Repositionierinformation 44, um eine genaue Ausrichtung des Informationsträgers 14d beim Repositionieren zu ermöglichen. Die Repositionierinformation 44 kann eine Skala, ein Positionierkreuz, ein Pfeilsymbol 44 oder eine ähnliche, vorzugsweise sichtbare, Information sein. Die Repositionierinformation 44 ist vorzugsweise an der Frontfläche des Informationsträgers 14d angeordnet.

In einer Variante kann die Repositionierinformation 44 auch auf der rückseitigen Fläche des Informationsträgers angeordnet sein. Für besondere Anwendungen kann dies bevorzugt sein, z.B. wenn die gesamte Frontfläche bedruckt ist und kein Platz mehr für die Anbringung der Repositionierinformation verfügbar ist.

Besonders vorteilhaft kann die Repositionierinformation 44 für Informationsträger 14d mit einer NFC-Vorrichtung sein. Mit Hilfe der Repositionierinformation 44 kann der Informationsträger 14d mit der NFC-Vorrichtung genau auf einen Ort zur Repositionierung auf einem NFC-Lesegerät, wie z.B. einem Smartphone 20, ausgerichtet werden. Die Repositionierinformation 44 kann auch Angaben 45 zu verschiedenen Smartphone-Modellen aufweisen. Dies kann deswegen vorteilhaft sein, da die NFC-Lesevorrichtungen für verschiedene Smartphone-Modelle an verschiedenen Orten des Smartphones 20 angeordnet sind. Eine genaue Ausrichtung des Informationsträgers 14d mit der NFC-Vorrichtung, kann daher eine zuverlässige Nahfeldkommunikation zwischen dem Informationsträger 14d und dem NFC-Lesegerät ermöglichen.

Entsprechende Repositionierinformationen können für andere Anwendungsfälle vorgesehen werden, bei welchen die Informationsträger analoge Informationen, z.B. bedruckte Informationen, aufweisen und durch das menschliche Auge gelesen werden. Dies kann z.B. für Informationsträger nützlich sein, welche als Sammelmarken oder Sammelbelege durch den Konsumenten gesammelt und auf einer Sammeleinheit, z.B. einer Sammelkarte, repositioniert werden können.

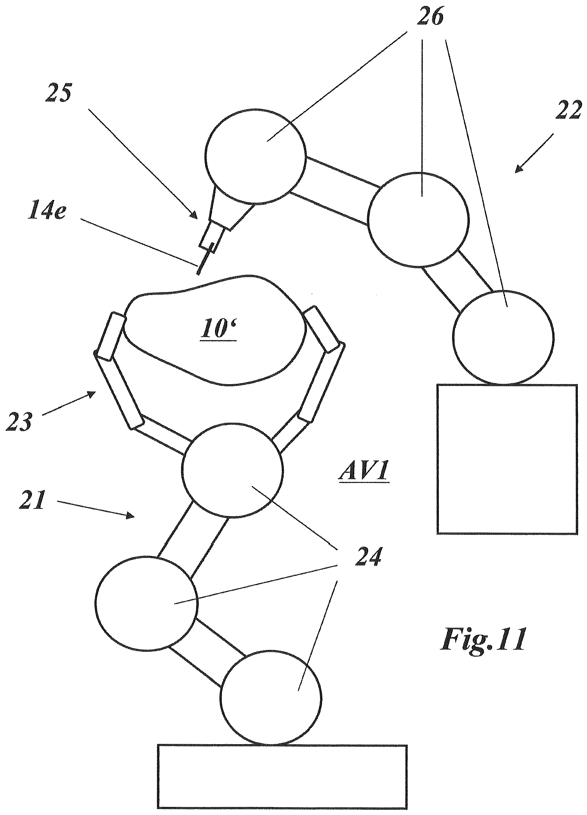

Figur 11 zeigt eine schematische Seitenansicht einer Ausführungsform einer steuerbaren Positioniervorrichtung 21 und einer adaptiven Applikationsvorrichtung 22, die zusammen eine hochflexible Applikationsvorrichtung AV1 bilden, welche in einem erfindungsgemässen Verfahren zum Einsatz kommen kann, wenn eine erhöhte Flexibilität gefordert ist, die z.B. bei der Applikation von Informationsträgern auf ständig wechselnden Waren notwendig ist. Die steuerbare Positioniervorrichtung 21 umfasst Greifarme 23, welche dazu dienen, eine unregelmässig gestaltete Ware 10' festzuhalten. Weiter weist die steuerbare Positioniervorrichtung 21 mehrere Gelenke 24 auf, welche eine beliebige dreidimensionale räumliche Bewegung der steuerbaren Positioniervorrichtung 21 erlauben. Die steuerbare Positioniervorrichtung 21 kann mit einer Steuerinformation gesteuert werden. Die Steuerinformation kann bei Bedarf mit dem Ergebnis einer Erfassung der Ware 10' gekoppelt sein. Die steuerbare Positioniervorrichtung 21 kann die Ware 10' derart festhalten und positionieren, dass die Ware 10' in geeigneter Weise zur Applikation eines Informationsträgers ausgerichtet wird. Vorteilhafterweise wird die Ware 10' in geeigneter Weise bezüglich der adaptiven Applikationsvorrichtung 22 ausgerichtet. Die adaptive Applikationsvorrichtung 22 umfasst eine Haltevorrichtung 25 und Gelenke 26. Die beispielsweise mit einem Saugnapf oder Greifer ausgestattete Haltevorrichtung 25 kann einen Informationsträger 14e festhalten und nach dem Applizieren loslassen. Die adaptive Applikationsvorrichtung 22 ist mittels der Gelenke 26 dreidimensional räumlich bewegbar. Durch eine geeignete Bewegung der adaptiven Applikationsvorrichtung 22 kann die Haltevorrichtung 25 z.B. aus einem Labelmagazin (nicht gezeigt in der Figur) einen Informationsträger 14e greifen und zur Ware 10' bringen. Durch eine geeignete Bewegung und das Aufbringen eines geeigneten Drucks kann die adaptive Applikationsvorrichtung 22 den Informationsträger 14e an einem vorbestimmten Ort an der Ware 10' aufbringen. Die adaptive Applikationsvorrichtung 22 kann dabei von einer Steuerinformation gesteuert sein, wobei die Steuerinformation bei Bedarf mit dem Ergebnis einer Erfassung der Ware 10' gekoppelt sein kann. Die Steuerinformation kann z.B. den Druck der Applikation oder den Zeitpunkt der Ablösung des Informationsträgers 14e von der Haltevorrichtung 25 steuern.

In der Figur 11 ist die adaptive Applikationsvorrichtung 22 mit drei Gelenken 26 und einer Haltevorrichtung 25 gezeigt. Es ist aber auch denkbar, dass die adaptive Applikationsvorrichtung 22 mehr Gelenke und insbesondere mehrere unabhängig voneinander bewegbare Haltevorrichtungen 25 aufweist, so dass z.B. je nach Anwendung mehrere und/oder verschiedene Informationsträger an mehrere und/oder verschiedene Waren angebracht werden können. Es ist ebenso denkbar, dass die steuerbare Positioniervorrichtung 21 mehrere Gelenke und mehr als die in der Figur 11 gezeigten zwei Greifarme aufweist, so dass mehrere Waren unabhängig voneinander festgehalten werden können.

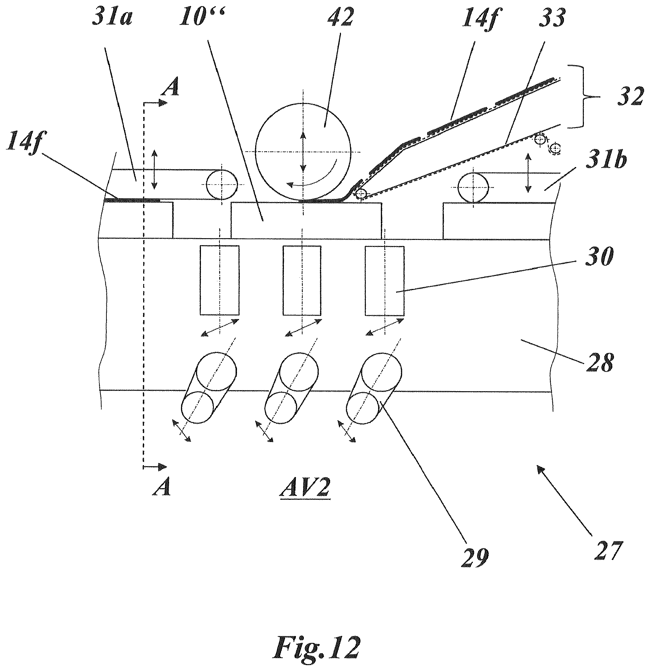

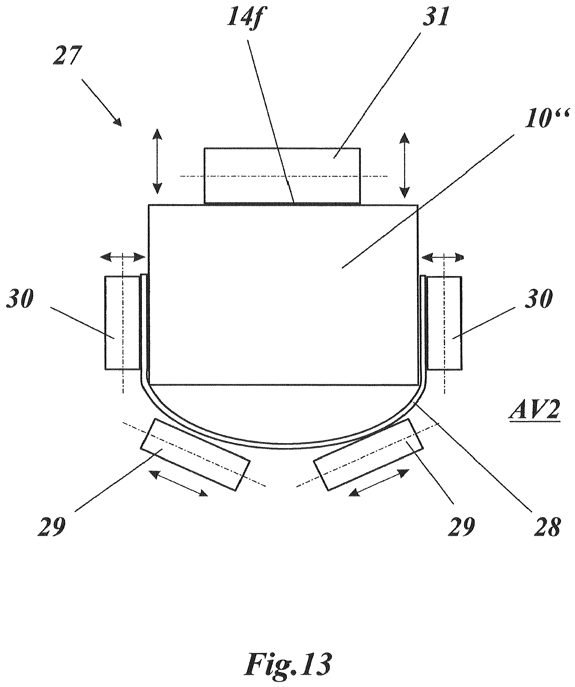

Figur 12 zeigt eine schematische Seitenansicht einer Applikationsvorrichtung 27 bzw. AV2, die für eine schnelle Applikation bei einfachen und immer wiederkehrenden Warenformen besonders geeignet ist. In der Figur 12 hat die Ware 10" eine einfache quaderförmige, paketartige Verpackung. Selbstverständlich sind hier auch andere wiederkehrende Verpackungen denkbar. Zum Fördern der zu bearbeitenden Ware 10" unter einer Applikationsrolle 42 vorbei ist ein im Querschnitt U-förmiges flexibles Band 28, vorzugsweise aus Gummi, vorgesehen. Das Band 28 kann die Waren 10" haltend und positionierend aufnehmen, wobei ein Teil der Waren 10", welcher einen vorbestimmten Ort zur Ausstattung mit der zusätzlichen Information aufweist, aus dem U-förmigen Band herausragt, wie in der Figur 12 (und Figur 13) ersichtlich ist. Die Waren 10" werden durch Stützrollen 29 und Andruckrollen 30, welche aussen unten und seitlich am Band 28 anliegend angeordnet sind, gehalten und gefördert. Die Stützrollen 29 und Andruckrollen 30 sind jeweils in geeignete Raumrichtungen bewegbar ausgestaltet, was durch die Doppelpfeile in der Figur illustriert ist.

Durch die Bewegbarkeit der Stützrollen 29 und Andruckrollen 30 und die flexible Ausgestaltung des Bandes 28 wird für die Waren 10" ein sich anpassender Kanal gebildet, in welchem die Waren 10" gehalten und gefördert werden. Die Stützrollen 29 können auch dazu dienen, einen bestimmten Gegendruck auf die Ware 10" auszuüben, was bei der Applikation von Informationsträgern 14f vorteilhaft sein kann. Der Fördervorgang kann über eine Steuerinformation gesteuert werden, wobei die Steuerinformation mit einem Ergebnis einer vorherigen Erfassung der Ware 10" gekoppelt sein kann.

Die Applikationsvorrichtung 27 umfasst weiterhin Führungsbänder 31a,b und eine flexible Applikationsrolle 42, vorzugsweise aus Schaumstoff. Die Führungsbänder 31a,b Halten die Ware 10" auf einer vorgegebenen Höhe und tragen durch eine Rollbewegung zur Förderung der Waren 10" bei. Zusätzlich sind die Führungsbänder 31 a,b in vertikaler Richtung bewegbar, wie es in der Figur mit Doppelpfeilen angedeutet ist. Durch die Bewegung in vertikaler Richtung kann das Führungsband 31a einen Informationsträger 14f, der am vorbestimmten Ort an der Ware 10" aufliegt, andrücken. Die Applikationsrolle 42 ist ebenfalls in vertikaler Richtung bewegbar, was durch den Doppelpfeil in der Applikationsrolle 42 illustriert ist. Durch eine Rollbewegung kann die flexible Applikationsrolle 42 Informationsträger 14f, welche von einer Informationsträgerzuführvorrichtung 32 auf einem Trägerband 33 zugeführt werden, von dem Trägerband 33 abziehen und an einen vorbestimmten Ort der Ware 10" anlegen. Die Rollbewegung der flexiblen Applikationsrolle 42 ist durch einen gebogenen Pfeil innerhalb der Andruckrolle 42 angedeutet. Durch die flexible Ausgestaltung der flexiblen Applikationsrolle 42 ist eine Ausstattung von Waren mit unebenen oder von einer Regelfläche abweichenden Oberflächen mit zusätzlicher Information möglich, ohne die Ware 10" zu verformen oder die Verpackung der Ware 10" zu beschädigen.

Die Informationsträger 14f werden von der Informationsträgerzuführvorrichtung 32 zugeführt, wobei die Informationsträger 14f auf dem Trägerband 33 mittels einer Haftschicht abziehbar aufliegen. Das Trägerband 33 wird nach dem Abziehen der Informationsträger 14f in der Informationsträgerzuführvorrichtung 32 weitergeführt.

Die Geschwindigkeiten der Führungsbänder 31a,b, der Applikationsrolle 42 und des Bandes 28 sowie die Zuführgeschwindigkeit der Informationsträger 14f durch die Informationsträgerzuführvorrichtung 32 sind aufeinander abgestimmt, so dass eine geeignete Förderung der Waren 10" und eine zuverlässige Aufbringung der Informationsträger 14f auf die Waren 10" am vorbestimmten Ort gewährleistet ist. Die Geschwindigkeiten können durch eine Steuerinformation gesteuert sein, wobei die Steuerinformation mit einem Ergebnis einer Erfassung der Waren 10", z.B. einer optischen Erfassung einer bereits auf den Waren 10" vorhandenen Basis-Information, gekoppelt sein kann.

Figur 13 zeigt eine schematische Schnittansicht der Applikationsvorrichtung 27 bzw. AV2 entlang der Schnittlinie A-A in Figur 12. In der gezeigten Schnittansicht ist das U-förmige flexible Band 28 mit den Rollen 29 und 30 sichtbar. Bewegungen der Rollen sind mit Doppelpfeilen illustriert, wobei die Bewegungen der Rollen nicht auf die gezeigten Richtungen beschränkt sein müssen. In der Konfiguration, welche in der Figur gezeigt ist, drücken die seitlichen Andruckrollen 29 auf die Seitenflächen der Ware 10", welche teilweise im Band 28 aufgenommen ist und durch die Andruckrollen 29 im Band 28 festgehalten wird. Durch eine Rollbewegung der Andruckrollen 29 kann die Ware 10" gefördert werden. Das obere Führungsband 31 a dient sowohl zur Förderung der Ware 10" als auch zum Andrücken des Informationsträgers 14f an die Ware 10".

Wenn im Rahmen einer Marketing- oder Werbeaktion die Informationsträger 14 mit der zusätzlichen Information für den Endverbraucher nach Massgabe von externen Informationen bereitgestellt werden sollen, ist eine Verbindung des Applikationsprozesses 15a,b mit externen Informationsquellen, z.B. Datenbanken, zweckmässig.

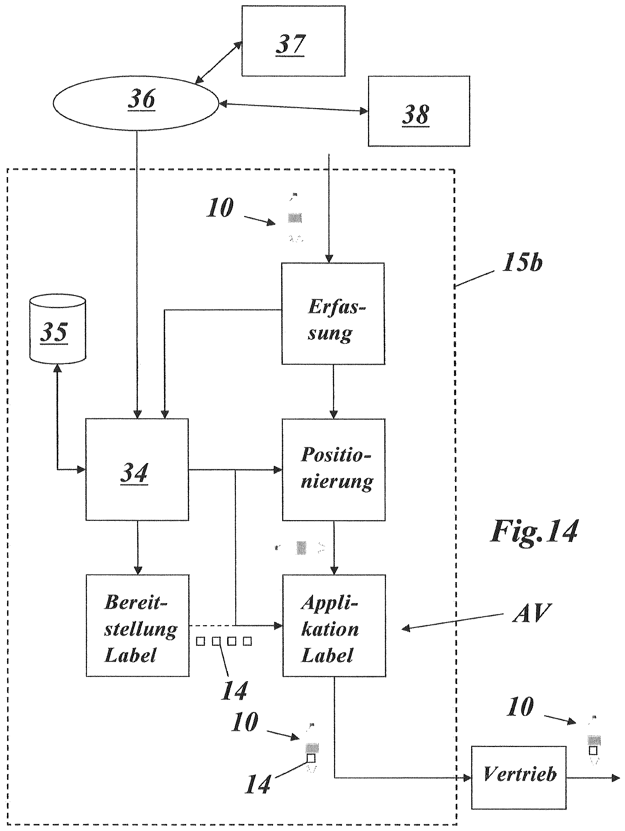

Figur 14 zeigt ein derartiges Schema, bei dem die Ware 10 im Verlauf eines Applikationsprozesses 1 5b einer Erfassung und Positionierung unterzogen wird, um dann im Applikationsschritt von der Applikationsvorrichtung AV mit dem Informationsträger (Label) 14 versehen zu werden.

Dieser Vorgang wird von einer Steuerung 34 gesteuert, die mit einem lokalen Speicher 35 zusammenarbeitet, von der Erfassung Daten über die Art und Form der Ware 10 erhält und die Bereitstellung der Label 14, die Positionierung der Ware 10 und die Applikation der Label 14 steuert. Zusätzlich ist die Steuerung über ein Kommunikationsnetz oder Netz 36 mit externen Datenbanken 37, 38 verbunden, in denen Daten über die bestellte Ware und über die Bestellung selbst abgelegt sind. Derartige Daten können z.B. Name und Adresse eines Endverbrauchers sein, der die Ware Online bestellt hat, oder Informationen über bestimmte Bestellerkreise, denen dann eine entsprechende Werbeaktion zugeordnet wird.

Diese Daten fliessen in die Steuerung 34 ein und beeinflussen vor allem die Bereitstellung der Label 14, aber ggf. auch die Positionierung der Label 14 auf der Ware 10.

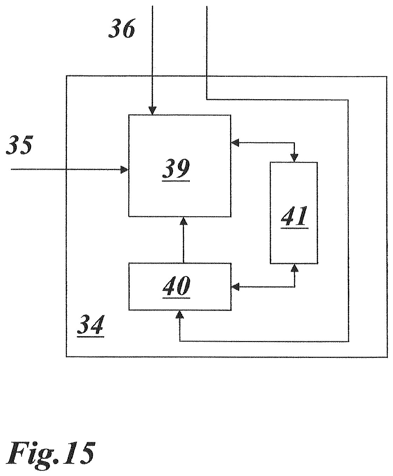

Innerhalb der Steuerung 34 kann gemäss Figur 15 eine lokale Steuer/Regeleinheit 39 untergebracht sein, die mit dem lokalen Speicher 35 zusammenarbeitet und die externen Daten aus dem Netz 36 aufnimmt. Der lokalen Steuer/Regeleinheit 39 ist eine Vorprozess-Steuerung/Regelung 40 vorgeschaltet, welche die Informationen aus dem Erfassungsschritt verarbeitet. Die lokale Steuer/Regeleinheit 39 und die Vorprozess-Steuerung/Regelung 40 arbeiten mit einem lernfähigen Regelmodul 41 zusammen, so dass insgesamt ein flexibler, adaptiver Applikationsprozess zur Verfügung steht, vgl. z.B. Fig. 11. Das Regelmodul 41 kann mit einer Bedienkonsole verbunden sein, um besondere Regelschritte einbauen zu können.

## Patentansprüche

1. Verfahren zum Ausstatten der Verpackung (11) einer verkaufsfertig verpackten Ware (10, 10', 10") mit zusätzlicher, für den Endabnehmer der Ware vorgesehenen Information, umfassend die folgenden Schritte:
a. Bereitstellen der verkaufsfertig verpackten Ware (10, 10', 10");
b. Bereitstellen eines mit der zusätzlichen Information versehenen Informationsträgers (14; 14a-f);
c. Bestimmen eines Ortes auf bzw. an der Verpackung (11), an welchem der Informationsträger (14; 14a-f) platziert werden soll;
d. Platzieren des Informationsträgers (14; 14a-f) an dem vorbestimmten Ort auf bzw. an der Verpackung (11) der verkaufsfertig verpackten Ware (10, 10', 10"), derart, dass der Informationsträger (14; 14a-f) an diesem Ort verbleibt; und
e. Bereitstellen der mit dem Informationsträger (14; 14a-f) versehenen Ware (10, 10', 10") zur Weiterverarbeitung.

2. Verfahren nach Anspruch 1, **dadurch gekennzeichnet, dass** auf der Verpackung (11) der verkaufsfertig verpackten Ware (10, 10', 10") bereits eine Basis-Information (12; 12a-c) für den Endabnehmer der Ware (10, 10', 10") platziert ist, und dass im Schritt (c) die Bestimmung des Ortes für die zusätzliche Information (14; 14a-f) nach Massgabe der Platzierung der Basis-Information (12; 12a-c) vorgenommen wird.

3. Verfahren nach Anspruch 2, **dadurch gekennzeichnet, dass** mit dem Anbringen der zusätzlichen Information (14a) die Basis-Information (12a) mindestens teilweise verdeckt wird.

4. Verfahren nach Anspruch 2, **dadurch gekennzeichnet, dass** die zusätzliche Information (14b) mit der Basis-Information (1 2b) eine informative Einheit bildet.

5. Verfahren nach Anspruch 2, **dadurch gekennzeichnet, dass** die zusätzliche Information (14c) vollständig getrennt von der Basis-Information (12c) angebracht wird.

6. Verfahren nach Anspruch 1, **dadurch gekennzeichnet, dass** vor dem Schritt (d) die verkaufsfertig verpackte Ware (10, 10', 10") für den Schritt (d) in ihrer räumlichen Lage im Hinblick auf den Schritt (d) positioniert wird.

7. Verfahren nach Anspruch 6, **dadurch gekennzeichnet, dass** vor der Positionierung der verkaufsfertig verpackten Ware (10, 10', 10") die Art und/oder aktuelle Position der Ware erfasst wird, und dass das Ergebnis dieser Erfassung zur Steuerung eines oder mehrerer der nachfolgenden Verfahrensschritte verwendet wird.

8. Verfahren nach Anspruch 7, **dadurch gekennzeichnet, dass** vor der Positionierung der verkaufsfertig verpackten Ware (10, 10', 10") die räumliche Form der Ware erfasst wird, und dass das Ergebnis dieser Erfassung zur Steuerung eines oder mehrerer der nachfolgenden Verfahrensschritte verwendet wird.

9. Verfahren nach Anspruch 1, **dadurch gekennzeichnet, dass** die verkaufsfertig verpackte Ware (10, 10', 10") in einem Produktionsprozess erzeugt wird, und dass der Schritt (a) an den Produktionsprozess anschliesst.

10. Verfahren nach Anspruch 1, **dadurch gekennzeichnet, dass** die verkaufsfertig verpackte Ware (10, 10', 10") in Gebinden vorliegt, und dass beim Schritt (a) die verkaufsfertig verpackte Ware (10, 10', 10") zur Weiterverarbeitung vereinzelt wird.

11. Verfahren nach Anspruch 9 oder 10, **dadurch gekennzeichnet, dass** beim Schritt (e) eine Vielzahl von mit dem Informationsträger (14; 14a-f) versehenen verkaufsfertig verpackten Waren (10, 10', 10") zu einem Gebinde zusammengefasst wird.

12. Verfahren nach Anspruch 1, **dadurch gekennzeichnet, dass** zur Bereitstellung der mit der zusätzlichen Information versehenen Informationsträger (14; 14a-f) von aussen zugeführte Steuerinformationen (16) verwendet werden.

13. Verfahren nach Anspruch 12, **dadurch gekennzeichnet, dass** die von aussen zugeführten Steuerinformationen (16) zur Individualisierung der mit der zusätzlichen Information versehenen Informationsträger (14; 14a-f) geeignet sind.

14. Verfahren nach Anspruch 12 oder 13, **dadurch gekennzeichnet, dass** die von aussen zugeführten Steuerinformationen (16) zur Individualisierung der mit der zusätzlichen Information versehenen Informationsträger (14; 14a-f) über ein Netz (36) aus externen Datenbanken (37, 38) zugeführt werden.

15. Vorrichtung zur Durchführung des Verfahrens nach einem der Ansprüche 1 bis 14, **dadurch gekennzeichnet, dass** die Vorrichtung eine steuerbare Applikationsvorrichtung (AV, AV1, AV2) sowie eine Steuerung (34) umfasst, welche den Betrieb der steuerbare Applikationsvorrichtung (AV, AV1, AV2) steuert.

16. Vorrichtung nach Anspruch 15, **dadurch gekennzeichnet, dass** die Steuerung (34) für die Eingabe von externen Steuerinformationen (16) ausgebildet ist.

17. Vorrichtung nach Anspruch 16, **dadurch gekennzeichnet, dass** die Steuerung (34) über ein Netz (36) mit externen Datenbanken (37, 38) in Verbindung steht.

18. Vorrichtung nach Anspruch 15 oder 16, **dadurch gekennzeichnet, dass** die Steuerung (34) mit Mitteln zur Erfassung der Art und/oder aktuellen Position und/oder räumlichen Form der Ware verbunden ist.

19. Vorrichtung nach Anspruch 15, **dadurch gekennzeichnet, dass** die steuerbare Applikationsvorrichtung (AV, AV1, AV2) mit Mitteln zur Erfassung der Art und/oder aktuellen Position und/oder räumlichen Form der Ware verbunden ist.

20. Vorrichtung nach Anspruch 15, **dadurch gekennzeichnet, dass** Mittel zur Bereitstellung der Informationsträger vorhanden sind, und dass die Mittel zur Bereitstellung der Informationsträger mit der Steuerung (34) und mit der steuerbaren Applikationsvorrichtung (AV, AV1, AV2) verbunden sind.

21. Vorrichtung nach Anspruch 15, **dadurch gekennzeichnet, dass** die steuerbare Applikationsvorrichtung (AV2) erste Mittel (28, 29, 30, 31, 31 a, 31 b) zum Vorbeiführen der Ware (10") an zweiten Mitteln (32, 33, 42) zum Applizieren der Informationsträger (14f) umfasst.

22. Informationsträger (14; 14a-f) zur Ausstattung der Verpackung (11) einer verkaufsfertig verpackten Ware (10, 10', 10") mit zusätzlicher, für den Endabnehmer der Ware vorgesehenen Information in einem Verfahren nach einem der Ansprüche 1 bis 14, **dadurch gekennzeichnet, dass** der Informationsträger (14; 14a-f) von der Ware (10, 10', 10") rückstandslos ablösbar ist.

23. Informationsträger nach Anspruch 22, **dadurch gekennzeichnet, dass** der abgelöste Informationsträger (10, 10', 10") an der Verpackung derselben Ware oder an einem anderen Ort repositionierbar ist.

24. Informationsträger nach Anspruch 22, **dadurch gekennzeichnet, dass** der Informationsträger (14d) mit elektronischen Mitteln zur Speicherung und/oder der Übermittlung der Information versehen ist.

25. Informationsträger nach Anspruch 24, **dadurch gekennzeichnet, dass** der Informationsträger (14d) eine NFC-Vorrichtung (18) umfasst.

26. Informationsträger nach Anspruch 25, **dadurch gekennzeichnet, dass** der Informationsträger (14d) derart auf einem NFC-fähigen Smart Phone (20) repositionierbar ist, dass die NFC-Vorrichtung (18) des Informationsträgers (14d) mit dem Smart Phone (20) eine Nahfeldkommunikation aufbauen kann.

27. Informationsträger nach einem der Ansprüche 24 bis 26, **dadurch gekennzeichnet dass** der Informationsträger (14d) Daten zur Bestimmung einer Verwendungszahl, vorzugsweise eine Seriennummer, des Informationsträgers (14d) umfasst.
